# EUROPÄISCHE PATENTSCHRIFT

(11) **EP 3 217 050 B1**
(45) Veröffentlichungstag und Bekanntmachung des Hinweises auf die Patenterteilung: **19.12.2018**
(21) Anmeldenummer: 17157438.7
(22) Anmeldetag: 22.02.2017
(51) Int. Cl.: F16K 5/06, F16K 5/04, F16K 5/20

(54) **DICHTUNGSANORDNUNG FÜR EIN DREHSCHIEBERVENTIL**
SEAL ASSEMBLY FOR A ROTARY SLIDING DRIVE
DISPOSITIF D'ÉTANCHÉITÉ POUR UNE VANNE ROTATIVE

(30) Priorität: 08.03.2016 DE 102016104183
(43) Veröffentlichungstag der Anmeldung: 13.09.2017
(73) Patentinhaber: Pierburg GmbH, 41460 Neuss (DE)
(72) Erfinder: Baden, Matthias, 47798 Krefeld (DE); DR. Krebber-Hortmann, Karl, 40221 Düsseldorf (DE); Sanders, Michael, 41564 Kaarst (DE)
(74) Vertreter: Patentanwälte ter Smitten Eberlein-Van Hoof Rütten Partnerschaftsgesellschaft mbB

(56) Entgegenhaltungen:
- EP-A1- 3 072 727
- CN-A- 105 020 432
- CN-U- 203 823 115
- US-A- 4 319 734

## Beschreibung

Die Erfindung betrifft eine Dichtungsanordnung für ein Drehschieberventil eines Kraftfahrzeug-Kühlkreislaufs, mit einem innerhalb eines Ventilgehäuses zwischen einem Einlass und einem Auslass drehbar gelagerten Regelkörper zur stufenlosen Regelung eines Durchströmungsquerschnitts, und einem an dem Auslass axial verschiebbar angeordneten Dichtelement, das zur gleitbeweglichen Abdichtung eine dem Regelkörper zugewandte axiale Stirnseitenfläche, mit der das Dichtelement in einem Anlagebereich an einer Außenkontur des Regelkörpers anliegt, und zumindest eine erste dem Regelkörper abgewandte axiale Stirnseitenflächen und eine zweite dem Regelkörper abgewandte axiale Stirnseitenflächen aufweist.

Derartige Dichtungsanordnungen dienen zur effektiven Abdichtung eines an sich bekannten Drehschieberventils zur Regelung eines strömenden Mediums, insbesondere eines Kühlmittelstroms einer Brennkraftmaschine. Das Dichtelement ist in der Regel am Auslass des Ventils angeordnet und bildet mit der dem Regelkörper zugewandten Stirnseitenfläche eine an die Außenkontur des Regelkörpers angepasste, axial wirkende Dichtfläche. Dadurch kann das Dichtelement - zur Vermeidung einer Überströmung an der Außenkontur bzw. Mantelfläche des Regelkörpers - einen mit dem Einlass verbundenen Zwischenraum zwischen dem Ventilgehäuse und dem Regelkörper gegenüber dem Auslass des Ventils abdichten.

Das Dichtelement ist zumeist in Form eines Rings oder einer Hülse aufgebaut, ist koaxial zu dem Auslasskanal zwischen Auslasskanal und Regelkörper angeordnet, und ist axial bewegbar. Dadurch kann bei einem Öffnen und Schließen des Ventils, das heißt bei einem Drehen des Regelkörpers, der Regelkörper mit der Außenkontur an der Stirnseite des Dichtelements entlang gleiten und gleichzeitig abdichten, idealerweise ohne dass ein Abschaben der Dichtfläche des Dichtelementes durch die Reibung bei der Bewegung des Regelkörpers entlang der Dichtfläche zu befürchten ist. Zur Verbesserung der Dichtwirkung kann das Dichtelement zumindest im geschlossenen Zustand des Ventils mittels eines elastischen Vorspannenelementes axial in Richtung des Regelkörpers vorgespannt sein, so dass die an dem Regelkörper anliegende Stirnseite des Dichtelements eine Leckageströmung vom Einlass zum Auslass blockiert.

Aus der DE 10 2009 025 341 A1 ist ein Drehschieberventil mit einem Verstellglied bekannt, bei dem zur Abdichtung eines Gehäuseeinlasses gegenüber einem Gehäuseauslass ein axial verschiebbares Dichtelement vorgesehenen ist, das mittels einer Feder axial auf das Verstellglied vorgespannt ist und mit einer Stirnseitenfläche vollflächig an einer Außenkontur des Verstellglieds anliegt.

Des Weiteren ist aus der US 4,319,734 ein Dichtelement für ein Drehschieberventil bekannt, bei dem das Dichtelement im radial inneren Bereich am Regelkörper anliegt und die vorhandenen Stirnseitenflächen derart zueinander angeordnet sind, dass ein Druckausgleich über das Dichtelement erreicht wird. So wird eine konstante Anpresskraft am Dichtelement erzeugt, welche ausschließlich durch ein Federelement bestimmt wird, welches das Dichtelement mit einer konstanten Kraft gegen den Regelkörper belastet.

In bestimmten Situationen, insbesondere bei erhöhten Druckschwankungen und/oder Druckdifferenzen zwischen Eingangs- und Ausgangsdruck und/oder bei einer Verunreinigung des Anlagebereichs des Dichtelements auf der Außenkontur des Regelkörpers, kann es jedoch zu einem unerwünschten, insbesondere einseitigen Abheben des Dichtelements vom Regelkörper kommen, so dass bei geschlossenem Ventil ein Leckagestrom zwischen Einlass und Auslass freigegeben ist oder das Dichtelement durch ein Verkanten beim Drehen des Regelkörpers zerstört wird.

Der Erfindung liegt daher die Aufgabe zugrunde, eine Dichtungsanordnung für ein Drehschieberventil eines Kraftfahrzeug-Kühlkreislaufs bereitzustellen, die eine effektive Dichtwirkung über eine lange Lebensdauer sicherstellt, einen relativ kompakten Aufbau aufweist sowie eine kostengünstige Herstellung und Montage ermöglicht.

Die Lösung der Aufgabe erfolgt erfindungsgemäß durch eine Dichtungsanordnung mit den Merkmalen des Anspruchs 1.

Erfindungsgemäß ist der Anlagebereich ausschließlich in einem radial äußeren Bereich der dem Regelkörper zugewandten Stirnseitenfläche ausgebildet, wobei die dem Regelkörper zugewandte Stirnseitenfläche in einem radial inneren Bereich sowie die zweite dem Regelkörper abgewandten Stirnseitenfläche jeweils mit dem Auslass und die erste dem Regelkörper abgewandte Stirnseitenfläche mit dem Einlass fluidisch verbunden sind. Der Anlagebereich ist somit auf einen ringförmigen Kontaktbereich radial außen an der dem Regelkörper zugewandten Stirnseitenfläche beschränkt. Der nicht an dem Regelkörper anliegende, radial innere Bereich der dem Regelkörper zugewandten Stirnseitenfläche sowie die zweite dem Regelkörper abgewandte Stirnseitenfläche bilden jeweils eine axiale Druck- und Gegendruckangriffsfläche, die derart zueinander ausgerichtet sind, dass die im geschlossenen Zustand des Ventils an dem Dichtelement anliegenden ausgangsseitigen axialen Druckkräfte sich teilweise gegeneinander aufheben. Die mit dem Einlass verbundene, erste dem Regelkörper abgewandte Stirnseitenfläche bildet ebenfalls eine axiale Druckangriffsfläche aus, zu der jedoch keine mit dem Einlass verbundene Gegendruckangriffsfläche vorgesehen ist, so dass der an der ersten dem Regelkörper abgewandten Stirnseitenfläche anliegende Einlassdruck ein über den Umfang gleichmäßiges Verschieben bzw. Drücken des Dichtelements in Richtung des Regelkörpers bei anliegender Druckdifferenz bewirkt. Folglich können an dem Dichtelement bestimmte Druckangriffsflächen bzw. eine vorgegebene Druckkraftverteilung definiert sein, durch die das Dichtelement druckunterstützt axial in Richtung des Regelkörpers verschoben bzw. gedrückt werden kann. Dadurch kann im geschlossenen Zustand des Ventils eine Druckdifferenz zwischen dem Innenraum des Drehschiebergehäuses und dem abzusperrendem Ventilauslass, insbesondere ein höherer Innenraumdruck, eine Verstärkung der Anpresskraft des Dichtelements in Richtung des Regelkörpers bewirken. Die an den Druckangriffsflächen des Dichtelements bereitgestellte Druckkraft zum Anpressen des Dichtelements kann proportional zu der Druckdifferenz - und somit zur entsprechend erforderlichen Anpresskraft - ansteigen, so dass hierdurch im geschlossenen Zustand des Ventils eine besonders effektive Abdichtung ermöglicht ist. Bei einem Öffnen des Ventils kann ein Ausgleich des Einlass- und Auslassdruckes stattfinden, wodurch die Anpresskraft des Dichtelements in Richtung des Regelkörpers verringert und die Drehung des Regelkörpers vereinfacht ist. Dadurch können mit zunehmender Öffnung des Ventils die Reibungskräfte an der Dichtung deutlich verringert und somit die Lebensdauer des Ventils verlängert werden. Darüber hinaus ist durch eine solche Dichtungsanordnung ermöglicht, dass ein separates elastisches Vorspannenelement zum dauerhaften Vorspannen des Dichtelements relativ klein bzw. mit einer relativ geringen Vorspannkraft gewählt werden kann, wenn nicht sogar gänzlich auf ein solches separates Vorspannelement verzichtet werden kann. Dadurch kann das Ventil relativ kompakt aufgebaut und eine kostengünstige Herstellung und Montage ermöglicht sein.

Vorzugsweise ist die dem Regelkörper zugewandte Stirnseitenfläche derart konisch ausgebildet, dass ein zwischen Dichtelement und Regelkörper ausgebildeter Abstand nach radial innen zunimmt. Der radial innere Bereich der dem Regelkörper zugewandten Stirnseitenfläche ist insbesondere als Schräge ausgebildet und liegt nicht an dem Regelkörper an, sondern ist von diesem beabstandet angeordnet. Dadurch kann der radial innere Bereich der dem Regelkörper zugewandten Stirnseitenfläche als auslassseitige Gegendruckangriffsfläche genutzt werden und das Dichtelement - da ein als Gegendruckangriffsfläche ausgebildeter zusätzlicher axialer Absatz somit nicht erforderlich ist - relativ kompakt aufgebaut sein. Zudem gelangt das Dichtelement lediglich mit einem äußeren ringförmigen Anlagebereich mit dem Regelkörper in Kontakt und kann aufgrund der konischen Form der dem Regelkörper zugewandten Stirnseitenfläche besonders exakt auf die Mantelfläche des Regelkörpers aufgesetzt werden, so dass die Abdichtung zwischen Dichtelement und Regelkörper besonders effektiv ist.

Vorzugsweise ist der radial innere Bereich der dem Regelkörper zugewandten Stirnseitenfläche gegenüber dem als Anlagebereich dienenden radial äußeren Bereich der dem Regelkörper zugewandten Stirnseitenfläche flächenmäßig um ein Vielfaches größer ausgebildet. Beispielsweise weist der radial innere Bereich eine Fläche auf, die zehnmal größer ist als die des radial äußeren Bereichs. Dadurch kann der radial innere Bereich, der bezüglich der dem Regelkörper abgewandten Stirnseitenflächen eine Gegendruckangriffsfläche bildet, derart groß ausgebildet sein, dass die im geschlossenen Zustand des Ventils an dem Dichtelement anliegenden ausgangsseitigen axialen Druckkräfte sich teilweise gegeneinander aufheben können.

In einer Ausgestaltung der Erfindung weist das Dichtelement in einem axialen Abschnitt zwischen der ersten dem Regelkörper abgewandten Stirnseitenfläche und der zweiten dem Regelkörper abgewandten Stirnseitenfläche, insbesondere an einer radialen Außenwandung, einen umlaufenden Dichtring auf. Dadurch können die beiden dem Regelkörper abgewandten Stirnseitenflächen in relativ einfacher Weise fluidisch voneinander getrennt sein, und so die Funktion der beiden dem Regelkörper abgewandten Stirnseitenflächen, auf die unterschiedliche Drücke wirken, sichergestellt werden. Vorteilhafterweise ist der Dichtring an einem axialen Abschnitt des Dichtelements angeordnet, an dem das Dichtelement den kleinsten Außendurchmesser aufweist.

Vorzugsweise weist das Dichtelement an einer Innenwandung zwischen der dem Regelkörper zugewandten Stirnseitenfläche und der zweiten dem Regelkörper abgewandten Stirnseitenfläche einen gleichbleibenden Innendurchmesser auf. Folglich ist an der Innenwandung des Dichtelements kein Absatz oder Vorsprung ausgebildet, so dass ein gleichbleibender, runder Kanal ausgebildet ist. Dadurch kann im geöffneten Zustand des Ventils eine relativ unbeeinflusste Durchströmung des Kanals ohne Strömungshindernisse, welche den Druckverlust erhöhen würden, durch das Medium erfolgen. Es sollte deutlich sein, dass - unabhängig von der zuvor erläuterten Ausgestaltung der Innenwandung - die dem Regelkörper zugewandte Stirnseitenfläche konisch bzw. schräg ausgebildet sein kann.

Vorzugsweise ist das Dichtelement in einem in das Ventilgehäuse eingesetzten, separaten Zwischenstück gelagert. Das Zwischenstück kann insbesondere ein Profilteil bzw. eine Profildichtung sein, die gegenüber dem Ventilgehäuse unbeweglich angeordnet ist. Dadurch kann das Dichtelement innerhalb und entlang dieses Zwischenstücks axial verschiebbar sein, ohne dass das Dichtelement in Kontakt mit dem Ventilgehäuse gelangt. Dadurch können die sehr präzise zueinander gelagerten Bauteile separiert und somit gesondert hergestellt werden, so dass die Herstellung und Montage der Dichtungsanordnung relativ kostengünstig ist. Das Zwischenstück weist zur radialen Abdichtung des Zwischenstücks gegenüber dem Ventilgehäuse vorteilhafterweise einen radial außen an dem Zwischenstück umlaufenden Dichtring auf.

Besonders bevorzugt weist das Zwischenstück einen nach radial innen hervorstehenden, axialen Absatz auf, an dem eine Feder anliegt, die das Dichtelement in Richtung des Regelkörpers vorspannt. Dadurch kann das Dichtelement auch in einem Zustand, in dem keine Druckdifferenz zwischen dem Einlass und dem Auslass anliegt, in einer einen Leckagestrom verschließenden Position gehalten werden.

Vorteilhafterweise ist der Regelkörper kugelförmig und das Dichtelement zu einer Auslasskanal-Mittelachse symmetrisch ausgebildet. Die Auslasskanal-Mittelachse ist bevorzugt senkrecht zu einer Einlasskanal-Mittelachse angeordnet und führt durch den Mittelpunkt des Regelkörpers. Dadurch kann das Dichtelement besonders exakt auf die Außenkontur des Regelkörpers aufgesetzt werden.

Vorzugsweise ist der Anlagebereich in einem axialen Abschnitt des Dichtelements angeordnet, an dem das Dichtelement den größten Außendurchmesser aufweist. Beispielsweise weist das Dichtelement über dessen Längserstreckung an der Außenfläche einen Absatz auf, so dass das Dichtelement zwei Außendurchmesser aufweist, wobei an dem Abschnitt mit dem größeren Außendurchmesser die dem Regelkörper zugewandte Stirnseitenfläche mit dem axialen Anlagebereich angeordnet ist. Dadurch kann die dem Regelkörper zugewandte Stirnseitenfläche, insbesondere der innere Bereich dieser Stirnseitenfläche, besonders großflächig ausgebildet sein, so dass eine relativ große Druckangriffsfläche geschaffen ist. An dem oben genannten Absatz der Außenfläche des Dichtelements kann die dem Einlassdruck zugeordnete, erste dem Regelkörper abgewandte Seitenfläche ausgebildet sein. Durch die Wahl der Größe der Stirnseitenflächen kann bei der Auslegung der Dichtungsanordnung eine Anpresskraft entsprechend der zu erwartenden Druckdifferenz eingestellt werden.

Vorteilhafterweise ist der Anlagebereich als eine Linienberührung ausgebildet. Folglich liegt das Dichtelement lediglich mit einer radial außen an der axialen, dem Regelkörper zugewandten Stirnseitenfläche ausgebildeten, besonders schmalen ringförmigen Berührungsfläche an dem Regelkörper an. Dadurch kann das Dichtelement besonders exakt auf die Außenkontur des Regelkörpers aufgesetzt werden, so dass die Abdichtung zwischen Dichtelement und Regelkörper besonders effektiv ist. Ferner können an dem Anlagebereich auftretende Ablagerungen oder Verunreinigungen, beispielsweise beim Drehen des Regelkörpers, relativ einfach von der dem Regelkörper zugewandten Stirnseitenfläche aufgebrochen und somit von der Mantelfläche des Regelkörpers abgelöst werden, so dass ein dauerhaft dichter Sitz des Dichtelements an der Außenkontur gewährleistet werden kann.

Die Dichtungsanordnung zeichnet sich entsprechend dadurch aus, dass eine sichere Abdichtung über eine lange Lebensdauer auch ohne zusätzliche Elemente erreicht wird, so dass Kosten reduziert werden können. Dabei ist der Aufbau der Dichtungsanordnung aufgrund guter Zugänglichkeit und geringer Teileanzahl sehr einfach. Zudem liegt im geschlossenen Zustand des Ventils eine relativ hohe Anpresskraft und beim Öffnen bzw. Schließen des Ventils eine relativ geringe Anpresskraft des Dichtelements in Richtung des Regelkörpers vor.

Nachfolgend wird die Erfindung anhand einer bevorzugten Ausführungsform unter Bezugnahme auf die anliegenden Zeichnungen näher erläutert.
Figur 1 zeigt schematisch eine Seitenansicht eines Drehschieberventils mit einer erfindungsgemäßen Dichtungsanordnung in geschnittener Darstellung, und
Figur 2 zeigt schematisch eine Detailansicht der Dichtungsanordnung.

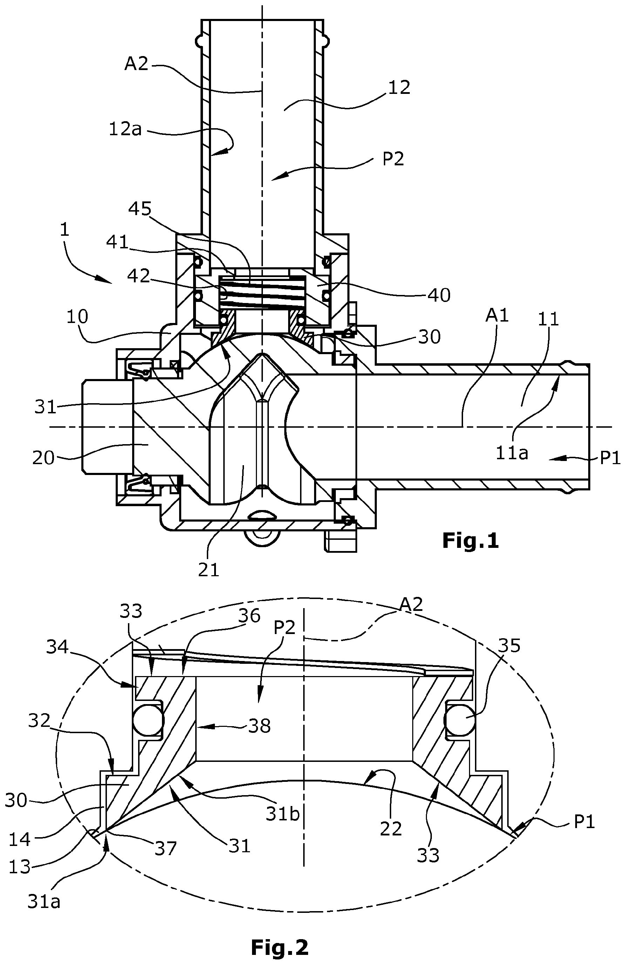

In der Figur 1 ist ein Drehschieberventil 1 eines nicht dargestellten Kraftfahrzeug-Kühlkreislaufs mit einer erfindungsgemäßen Dichtungsanordnung gezeigt. Das Drehschieberventil 1 umfasst ein Ventilgehäuse 10 mit einem Einlass 11 und einem Auslass 12. Der Einlass 11 weist einen Einlasskanal 11a auf, der koaxial zu einer Einlasskanal-Mittelachse bzw. ersten Hauptachse A1 des Ventils 1 ausgebildet ist. Der Auslass 12 weist einen Auslasskanal 12a auf, der koaxial zu einer Auslasskanal-Mittelachse bzw. zweiten Hauptachse A2 ausgebildet ist, wobei die zweite Hauptachse A2 senkrecht zu der Hauptachse A1 angeordnet ist. Innerhalb des Ventilgehäuses 10 zwischen dem Einlass 11 und dem Auslass 12 ist ein um die erste Hauptachse A1 drehbar gelagerter Regelkörper 20 zur stufenlosen Regelung eines Durchströmungsquerschnitts 21 angeordnet.

Der Regelkörper 20 ist als ein Kugeldrehschieber ausgebildet und weist einen von einem Medium durchströmbaren Durchgangskanal 21 auf. Durch Drehen des Regelkörpers 20 um die Hauptachse A1 wird der Strömungskanal 21 zwischen dem Einlasskanal 11 und dem Auslasskanal 12 freigegeben oder verschlossen. In der Figur 1 befindet sich der Drehschieber 1 in einem den Durchgangskanal 21 verschließenden Zustand. Um ein Drehen des Regelkörpers 20 zu ermöglichen, ist der Regelkörper 20 spielbehaftet gelagert, wobei auch an der kugelförmigen Außenkontur 22 des Regelkörpers 20 ein dem Einlass 11 zugeordneter einlassseitiger Druck P1 anliegt.

Zur Vermeidung eines Leckagestroms zwischen dem Einlass 11 und dem Auslass 12, insbesondere an der kugelförmigen Außenkontur 22 des Regelkörpers 20, ist an dem Auslass 12 eine Einrichtung zur Abdichtung vorgesehen. Dazu sind an dem Auslass 12 ein separates Zwischenstück 40 sowie ein darin beweglich angeordnetes Dichtelement 30 angeordnet, die beide bei der Montage des Ventilglieds 10 auslassseitig in das Ventilgehäuse 10 eingeschoben und durch den Auslasskanal 12 verspannt werden können.

Das Zwischenstück 40 ist hülsenförmig aufgebaut, koaxial zu der zweiten Hauptachse A2 ausgerichtet, in eine in dem Ventilgehäuse 10 ausgebildete Aufnahme axial eingesetzt und umfangsseitig über einen Dichtring gegenüber dem Ventilgehäuse 10 abgedichtet, so dass ein axialer Leckagestrom an der Außenseite des Zwischenstücks 40 blockiert ist. Das Zwischenstück 40 weist an einem dem Regelkörper 20 abgewandten axialen Ende einen nach radial innen hervorstehenden ringförmigen Absatz 41 auf, an dem sich eine Feder 45 abstützt, die das Dichtelement 30 in Richtung des Regelkörpers 20 vorspannt. Die Feder 45 ist von dem Zwischenstück 40 radial umgeben und insbesondere in einem axialen Kanalabschnitt 42 des Zwischenstücks 40 angeordnet. In diesem axialen Kanalabschnitt 42 ist auch das Dichtelement 30 axial verschiebbar gelagert angeordnet. An einer Umfangsseite 34 des Dichtelements 30 ist ein Dichtring 35 angeordnet, durch den ein axialer Leckagestrom an der Außenseite des Dichtelements 30 zwischen dem Dichtelement 30 und dem Zwischenstück 40 verhindert wird.

Das Dichtelement 30 dient zur gleitbeweglichen Abdichtung des Einlasses 11 gegenüber dem Auslass 12. Dazu weist das Dichtelement 30 eine axiale, dem Regelkörper 20 zugewandte Stirnseitenfläche 31 auf, mit deren radial äußeren Bereich 31a das Dichtelement 30 an einem Anlagebereich 37 der Außenkontur 22 des Regelkörpers 20 anliegt. Die dem Regelkörper 20 zugewandte Stirnseitenfläche 31 ist nach radial innen konisch zusammenlaufend ausgebildet, so dass sich ein axialer Abstand zwischen dem Dichtelement 30 und dem Regelkörper 20 nach radial innen hin vergrößert. Dadurch gelangt das Dichtelement 30 ausschließlich mit seinem radial äußeren Bereich 31a der Stirnseitenfläche 31 an der Außenkontur 22 des Regelkörpers 20 zum Anliegen. Somit ist - wie insbesondere in der Figur 2 erkennbar ist - der Anlagebereich 37 ausschließlich in dem Bereich 31a der dem Regelkörper 20 zugewandten Stirnseitenfläche 31 ausgebildet, so dass im Wesentlichen eine umlaufende Linienberührung erfolgt. Ein radial innerer Bereich 31b der dem Regelkörper 20 zugewandten Stirnseitenfläche 31 steht mit dem Regelkörper 20 nicht in Kontakt.

Darüber hinaus weist das Dichtelement 30 zumindest zwei dem Regelkörper 20 abgewandte axiale Stirnseitenflächen 32, 33 auf, die mittels des radial außen, axial zwischen den beiden dem Regelkörper abgewandten Stirnseitenflächen 32, 33 an dem Dichtelement 30 angeordneten Dichtrings 35 fluidisch voneinander getrennt sind. Dadurch können die beiden dem Regelkörper 20 abgewandten Stirnseitenflächen 32, 33 jeweils als eine Druckangriffsfläche dienen, durch die das Dichtelement 30 mittels des anliegenden Drucks in eine Richtung, insbesondere in Richtung auf den Regelkörper 20, gedrückt und verschoben werden kann. Darüber hinaus weist das Dichtelement 30 zwischen der dem Regelkörper zugewandten Stirnseitenfläche 31 und der am axialen Ende 36 angeordneten zweiten dem Regelkörper 20 abgewandten Stirnseitenfläche 33 eine Innenwandung 38 mit gleichbleibendem Innendurchmesser auf, so dass in diesem Bereich eine axiale Druckangriffsfläche nicht ausgebildet ist.

Eine der dem Regelkörper 20 abgewandten Stirnseitenflächen 32, 33, nämlich die erste dem Regelkörper 20 abgewandte Stirnfläche 32, ist als eine radial außen an dem Dichtelement 30 hervorstehende Schulter ausgebildet. Die erste dem Regelkörper 20 abgewandte Stirnseitenfläche 32 ist über einen Spalt 13 zwischen dem Regelkörper 20 und dem Ventilgehäuse 10 sowie einem sich fortsetzenden Spalt 14 zwischen einer Innenwand des Auslassstutzens und dem Dichtelement 30 fluidisch mit dem Einlass 11 verbunden. An der Stirnfläche 32 liegt somit der Einlassdruck P1 an. Die andere der beiden dem Regelkörper 20 abgewandten Stirnseitenflächen 32, 33, nämlich die zweite dem Regelkörper 20 abgewandte Stirnfläche 33, ist an dem zum Regelkörper 20 abgewandten axialen Ende 36 des Dichtelements 30 angeordnet. Die Stirnfläche 33 dient zur Anlage der Feder 45 und ist fluidisch mit dem Auslass 12 verbunden. Folglich liegt an der Stirnfläche 33 ein Auslassdruck P2 an. Der radial innere Bereich 31b der dem Regelkörper 20 zugewandten Stirnseitenfläche 31 ist ebenfalls mit dem Auslass 12 fluidisch verbunden und folglich von dem Auslassdruck P2 beaufschlagt.

Der radial innere Bereich 31b der dem Regelkörper 20 zugewandten Stirnfläche 31 bildet eine Gegendruckangriffsfläche zu den Stirnflächen 32, 33. Der radial innere Bereich 31b entspricht flächenmäßig im Wesentlichen den beiden Stirnseitenflächen 32, 33, wobei im geschlossenen Zustand des Ventils 1 an dem Dichtelement 30 eine Druckdifferenz zwischen dem Einlassdruck P1 und dem Auslassdruck P2 anliegt, wobei der auf die Stirnfläche 32 wirkende Druck P1 größer als der auf die Stirnflächen 31b und 33 wirkende Druck P2 ist. Die Druckdifferenz wirkt entsprechend als axiale Kraft auf das Dichtelement 30 mit einem Betrag aus der Druckdifferenz multipliziert mit der Fläche 32. Dadurch kann im geschlossenen Zustand des Ventils 1, insbesondere auch bei Vorliegen eines relativ hohen einlassseitigen Drucks P1 und/oder bei auslassseitigen Druckschwankungen, ein Abheben des Dichtelements 30 von dem Regelkörper 20 verhindert werden.

Die erste dem Regelkörper 20 abgewandte Stirnseitenfläche 32 ist - wie oben erläutert - im geschlossenen Zustand des Ventils 1 mit dem Einlassdruck P1 beaufschlagt, und ist gegenüberliegend zu der im radial inneren Bereich 31b mit dem Auslassdruck P2 beaufschlagten, dem Regelkörper 20 zugewandten Stirnseitenfläche 31 angeordnet. Aufgrund des im geschlossenen Zustand des Ventils 1 üblicherweise vorherrschenden Druckverhältnisses, insbesondere einem gegenüber dem Auslassdruck P2 höheren Einlassdruck P1, kann folglich durch die Druckkräfteverteilung an den Stirnseitenflächen 31, 32, 33 ein Drücken des Dichtelements 30 in Richtung des Regelkörpers 20 bewirkt werden. Insbesondere kann der an der ersten dem Regelkörper 20 abgewandten Stirnseitenfläche 32 anliegende Einlassdruck P1 bei geschlossenem Ventil 1 ein Anpressen des Dichtelements 30 gegen den Regelkörper 20 und somit eine besonders effektive Abdichtung des Dichtelements 30 gegenüber dem Regelkörper 20 bewirken. Ferner kann dadurch die Vorspannkraft der Feder 45 relativ gering gewählt werden, so dass ein durch das Vorspannelement verursachtes, dauerhaft vorhandenes Vordrücken des Dichtelements 30 gegen den Regelkörper 20 nur relativ schwach ausgebildet ist. Dadurch kann insbesondere verhindert werden, dass bei einem Drehen des Regelkörpers 20 das Dichtelement 30 nicht in unnötiger Weise mit einer sehr hohen Feder-Anpresskraft gegen den Regelkörper 20 gepresst wird, so dass die bei der Drehung des Regelkörpers 20 auftretende Reibung zwischen Dichtelement 30 und Regelkörper 20 minimiert werden kann.

Somit ist das entlang der Auslass-Mittelachse A2 axial verschiebbar gelagerte Dichtelement 30 fluiddruckunterstützt und, insbesondere in einem druckdifferenzlosen Zustand, mittels der Feder 45 in Richtung des Regelkörpers 20 vorgespannt bzw. an dem Regelkörper 20 anliegend gehalten. Ferner ist das Dichtelement 30 in einer Sperrstellung des Drehschieberventils 1 bei Anliegen einer Druckdifferenz in Richtung des Regelkörpers 20 vorgespannt, so dass eine effektive Abdichtung zwischen Dichtelement 30 und Regelkörper 20 erreicht wird. Ferner kann das Dichtelement 30 beim Öffnen und/oder Schließen des Ventils 1 aufgrund der abnehmenden bzw. nicht vorhandenen Druckdifferenz zwischen dem Einlassdruck P1 und dem Auslassdruck P2 weniger auf den Regelkörper 20 vorgespannt sein, so dass ein reibungsarmes Bewegen des Regelkörpers 20 entlang der Stirnseitenfläche 21 des Dichtelements 20 ermöglicht ist.

### Bezugszeichenliste

- 1: Drehschieberventil
- 10: Ventilgehäuse
- 11: Einlass
- 11a: Einlasskanal
- 12: Auslass
- 12a: Auslasskanal
- 13: Spalt
- 14: Spalt
- 20: Regelkörper
- 21: Strömungskanal
- 22: Außenkontur
- 30: Dichtelement
- 31: Stirnseitenfläche
- 31a: radial äußerer Bereich
- 31b: radial innerer Bereich
- 32: Stirnseitenfläche
- 33: Stirnseitenfläche
- 34: Umfangseite
- 35: Dichtring
- 36: axiales Ende
- 37: Anlagebereich
- 38: Innenwandung
- 40: Zwischenstück
- 41: axialer Absatz
- 42: Kanalabschnitt
- 45: Feder
- P1: einlassseitiger Druck
- P2: auslassseitiger Druck
- A1: Hauptmittelachse
- A2: Mittelachse

## Patentansprüche

1. Dichtungsanordnung für ein Drehschieberventil (1) eines Kraftfahrzeug-Kühlkreislaufs, mit
- einem innerhalb eines Ventilgehäuses (10) zwischen einem Einlass (11) und einem Auslass (12) drehbar gelagerten Regelkörper (20) zur stufenlosen Regelung eines Durchströmungsquerschnitts (21), und
- einem an dem Auslass (12) axial verschiebbar angeordneten Dichtelement (30), das zur gleitbeweglichen Abdichtung eine dem Regelkörper (20) zugewandte axiale Stirnseitenfläche (31), mit der das Dichtelement (30) in einem Anlagebereich (37) an einer Außenkontur (22) des Regelkörpers (20) anliegt, und zumindest eine erste dem Regelkörper (20) abgewandte axiale Stirnseitenflächen (32) und eine zweite dem Regelkörper (20) abgewandte axiale Stirnseitenflächen (33) aufweist,
**dadurch gekennzeichnet, dass**
der Anlagebereich (37) ausschließlich in einem radial äußeren Bereich (31a) der dem Regelkörper (20) zugewandten Stirnseitenfläche (31) ausgebildet ist, wobei
die dem Regelkörper (20) zugewandte Stirnseitenfläche (31) in einem radial inneren Bereich (31b) sowie die zweite dem Regelkörper (20) abgewandte Stirnseitenflächen (33) jeweils mit dem Auslass (12) und die erste dem Regelkörper (20) abgewandte Stirnseitenflächen (32) mit dem Einlass (11) fluidisch verbunden sind.

2. Dichtungsanordnung nach Anspruch 1, **dadurch gekennzeichnet, dass**
die dem Regelkörper (20) zugewandte Stirnseitenfläche (31) derart konisch ausgebildet ist, dass ein zwischen dem Dichtelement (30) und dem Regelkörper (20) ausgebildeter Abstand nach radial innen zunimmt.

3. Dichtungsanordnung nach einem der Ansprüche 1 oder 2, **dadurch gekennzeichnet, dass**
der radial innere Bereich (31b) der dem Regelkörper (20) zugewandten Stirnseitenfläche (31) gegenüber dem als Anlagebereich (37) dienenden radial äußeren Bereich (31a) der dem Regelkörper (20) zugewandten Stirnseitenfläche (31) flächenmäßig größer ausgebildet ist.

4. Dichtungsanordnung nach einem der voranstehenden Ansprüche, **dadurch gekennzeichnet, dass**
das Dichtelement (30) in einem axialen Abschnitt zwischen den beiden dem Regelkörper (20) abgewandten Stirnseitenflächen (32, 33) einen umlaufenden Dichtring (35) aufweist.

5. Dichtungsanordnung nach einem der vorhergehenden Ansprüche, **dadurch gekennzeichnet, dass**
das Dichtelement (30) an einer Innenwandung (38) zwischen der dem Regelkörper (20) zugewandten Stirnseitenfläche (31) und der zweiten dem Regelkörper (20) abgewandten Stirnseitenfläche (33) einen gleichbleibenden Innendurchmesser aufweist.

6. Dichtungsanordnung nach einem der voranstehenden Ansprüche, **dadurch gekennzeichnet, dass**
das Dichtelement (30) in einem separaten Zwischenstück (40) gelagert ist.

7. Dichtungsanordnung nach Anspruch 6, **dadurch gekennzeichnet, dass**
das Zwischenstück (40) einen nach radial innen hervorstehenden axialen Absatz (41) aufweist, an dem eine das Dichtelement (30) in Richtung des Regelkörpers (20) vorspannende Feder (45) anliegt.

8. Dichtungsanordnung nach einem der voranstehenden Ansprüche, **dadurch gekennzeichnet, dass**
der Regelkörper (20) kugelförmig und das Dichtelement (30) zur Mittelachse (A2) symmetrisch ausgebildet ist.

9. Dichtungsanordnung nach einem der voranstehenden Ansprüche, **dadurch gekennzeichnet, dass**
der Anlagebereich (37) in einem axialen Abschnitt des Dichtelements (30) angeordnet ist, an dem das Dichtelement (30) den größten Außendurchmesser aufweist.

10. Dichtungsanordnung nach einem der voranstehenden Ansprüche, **dadurch gekennzeichnet, dass**
der Anlagebereich (37) als eine Linienberührung ausgebildet ist.

## Claims

1. Seal assembly for a rotary slide valve (1) of a motor vehicle cooling circuit, comprising
- a control body (20) for the continuous regulation of a flow cross section (21), said control body being rotatably supported in a valve housing (10) between an inlet (11) and an outlet (12), and
- a seal element (30) arranged at the outlet (12) in an axially displaceable manner, which, for a slidably movable sealing, comprises an axial front end face (31) facing the control body (20), by which the seal element (30) abuts against an outer contour (22) of the control body (20) in an abutment region (37), and at least one first axial front end face (32) averted from the control body (20) and a second axial front end face (33) averted from the control body (20),
**characterized in that**
the abutment region (37) is formed exclusively in a radially outer region (31a) of the front end face (31) facing the control body (20), wherein
the front end face (31) facing the control body (20), in a radially inner region (31b), and the second front end face (33) averted from the control body (20) are respectively fluidically connected with the outlet (12), and the first front end face (32) averted from the control body (20) is fluidically connected with the inlet (11).

2. Seal assembly of claim 1, **characterized in that** the front end face (31) facing the control body (20) is conical in shape such that a distance formed between the seal element (30) and the control body (20) increases radially inward.

3. Seal assembly of one of claims 1 or 2, **characterized in that** the radially inner region (31b) of the front end face (31) facing the control body (20) is configured to be larger in area than the radially outer region (31a) of the front end surface (31) facing the control body (20), which serves as the abutment region (37).

4. Seal assembly of one of the preceding claims, **characterized in that** the seal element (30) has a circumferentially extending seal ring (35) in an axial section between the two front end faces (32, 33) averted from the control body (20).

5. Seal assembly of one of the preceding claims, **characterized in that** the seal element (30) has a continuous inner diameter at an inner wall (38) between the front end surface (31) facing the control body (20) and the second front end surface (33) averted from the control body (20).

6. Seal assembly of one of the preceding claims, **characterized in that** the seal element (30) is supported in a separate intermediate piece (40).

7. Seal assembly of claim 6, **characterized in that** the intermediate piece (40) comprises a radially inward projecting axial step (41) on which a spring (45) abuts which biases the seal element (30) in the direction of the control body (20).

8. Seal assembly of one of the preceding claims, **characterized in that** the control body (20) is spherical in shape and the seal element (30) is formed to be symmetric with respect to the central axis (A2).

9. Seal assembly of one of the preceding claims, **characterized in that** the abutment region (37) is arranged in an axial section of the seal element (30) in which the seal element (30) has the largest outer diameter.

10. Seal assembly of one of the preceding claims, **characterized in that** the abutment region (37) is configured to a line contact.

## Revendications

1. Dispositif d'étanchéité pour une vanne rotative (1) d'un circuit de refroidissement d'un véhicule à moteur, comprenant
- un corps de réglage (20) supporté de manière rotative dans un boitier de vanne (10) entre une entrée (11) et une sortie (12), le corps de réglage étant prévu pour le réglage continu d'une section transversale d'écoulement (21), et
- un élément d'étanchéité (30) disposé à la sortie (12) de manière à être axialement déplaçable, ledit élément comprenant, pour une étanchéification mobile à glissement, une face frontale (31) axiale dirigée vers le corps de réglage (20), par laquelle ledit élément d'étanchéité (30) repose sur une contour extérieure (22) du corps de réglage (20) dans une région de contact (37), et au moins une première face frontale (32) axiale détournée du corps de réglage (20) et une deuxième face frontale (33) axiale détournée du corps de réglage (20),
**caractérisé en ce que**
la région de contact (37) est formée exclusivement dans une région (31a) radialement extérieure de la face frontale (31) axiale dirigée vers le corps de réglage (20),
la face frontale (31) dirigée vers le corps de réglage (20), celle-ci dans une région (31b) radialement intérieure, et la deuxième face frontale (33) détournée du corps de réglage (20) sont respectivement en communication fluidique avec l'entrée (11), et la première face frontale (32) détournée du corps de réglage (20) est en communication fluidique avec la sortie (12).

2. Dispositif d'étanchéité selon la revendication 1, **caractérisé en ce que** la face frontale (31) dirigée vers le corps de réglage (20) est de forme conique de sorte qu'une distance formée entre ledit élément d'étanchéité (30) et le corps de réglage (20) s'accroit vers l'intérieur radial.

3. Dispositif d'étanchéité selon l'une des revendications 1 ou 2, **caractérisé en ce que** la région (31b) radialement intérieure de la face frontale (31) dirigée vers le corps de réglage (20) est formée avec une surface plus grande que la région (31a) radialement extérieure de la face frontale (31) dirigée vers le corps de réglage (20), région servant comme région de contact (37).

4. Dispositif d'étanchéité selon l'une quelconque des revendications précédentes, **caractérisé en ce que** ledit élément d'étanchéité (30) présente une bague d'étanchéité (35) circonférentielle dans une section axiale entre les deux faces frontales (32, 33) détournées du corps de réglage (20).

5. Dispositif d'étanchéité selon l'une quelconque des revendications précédentes, **caractérisé en ce qu'**à une paroi intérieure (38) entre la face frontale (31) dirigée vers le corps de réglage (20) et la deuxième face frontale (33) détournée du corps de réglage (20), ledit élément d'étanchéité (30) présente un diamètre intérieur constant.

6. Dispositif d'étanchéité selon l'une quelconque des revendications précédentes, **caractérisé en ce que** ledit élément d'étanchéité (30) est supporté dans une pièce intermédiaire (40).

7. Dispositif d'étanchéité selon la revendication 6, **caractérisé en ce que** la pièce intermédiaire (40) a un épaulement (41) axial saillant vers l'intérieur radial, sur lequel épaulement repose un ressort (45) sollicitant ledit élément d'étanchéité (30) dans la direction du corps de réglage (20).

8. Dispositif d'étanchéité selon l'une quelconque des revendications précédentes, **caractérisé en ce que** le corps de réglage (20) est de forme sphérique et ledit élément d'étanchéité (30) est symétrique par rapport à l'axe central (A2).

9. Dispositif d'étanchéité selon l'une quelconque des revendications précédentes, **caractérisé en ce que** la région de contact (37) est disposée dans une section axiale dudit élément d'étanchéité (30, dans laquelle ledit élément d'étanchéité (30) a le diamètre extérieur le plus grand.

10. Dispositif d'étanchéité selon l'une quelconque des revendications précédentes, **caractérisé en ce que** la région de contact (37) est conçue comme un contact linéaire.
